# EUROPEAN PATENT APPLICATION

(11) **EP 1 146 441 A1**
(43) Date of publication of application: **17.10.2001**
(21) Application number: 00303031.9
(22) Date of filing: 11.04.2000
(51) Int. Cl.: G06F 17/30

(54) **Changing hypermedia content of a web site**

(71) Applicant: BRITISH TELECOMMUNICATIONS public limited company, London EC1A 7AJ (GB)
(72) Inventor: The designation of the inventor has not yet been filed
(74) Representative: Read, Matthew Charles

(57) **Abstract**

Pages of a web site can be selectively altered or added by remote users, by e-mailing updates to a computer configuration that supports the site. The web site comprises hypermedia produced from data organised in a hierarchical file structure with hyperlinks corresponding to the hierarchy of the file structure. An electronic mail message is constructed, addressed to a computer configuration, by clicking on a hyperlink in the web site. The e-mail automatically is provided with the address of the computer configuration together with file location data for placing the web page data into a predetermined position in the hierarchical file structure. The user places web page data corresponding to an update to be included in the web site, into the e-mail. The e-mail is then mailed to the computer configuration where the web page data is included in said hierarchical file structure according to the file location data. A conversion program module then converts the data in the hierarchical file structure, including the newly added web page data, into hypermedia for the web site with hyperlinks corresponding to the hierarchy of the file structure, thereby updating the web site with the mailed web page data.

## Description

This invention relates to changing hypermedia content of a web site.

It is known that data in the form of hypermedia such as hypertext, is often written in the hypertext language HTML and arranged in web pages that are provided by a server connected through a network to a client. The client may comprise a personal computer or other processing device capable of presenting the data retrieved from the server to a user. The network may comprise a local area network (LAN), a wide area network (WAN) or may comprise the Internet. For example, the World Wide Web comprises many servers connected over the Internet in a web, which have addresses in the form of universal resource locators (URL).

The hypertext information is arranged in web pages which include hyperlinks to allow the user to establish a link to another web page, which may be located on the same or a different server, the routing to the document being achieved by use of a URL in the web page at the hyperlink.

Web clients typically access the hypermedia information using a browser. An overview of the World Wide Web and HTML is given in Chapter 1 of "HTML 3.2 and CGI Unleashed" J. December and M. Ginsberg 1996 (ISBN 1-57521-177-7). Although HTML is usually used to prepare web pages, they can also be created in other markup languages.

Web pages can display text, graphics and files of other descriptions such as video images, animated graphics and audio samples. Hypermedia have the significant advantage that the client can rapidly transfer viewing from one document to another by using a mouse to click on hyperlinks in the document, permitting the user to transfer from one web site to another, which may be at different physical locations.

As well known in the art, markup languages such as HTML define the location and format of hypermedia included in the web page. For example, the page may include text in a particular font and at a particular location defined by HTML markers on the page. In order to create a web site, individual web pages may be written by a programmer in HTML but this is a time consuming exercise and a number of alternative approaches have been implemented hitherto.

HTML converter programs are available which translate documents into HTML. For example, a document prepared in a wordprocessor format can be converted into HTML by the use of such a conversion program. Sometimes, templates are used which define the layout of a page in HTML, into which the user can insert text or other data such as images, in order to create a web page with a particular look and feel.

Often HTML editors are used to create and edit hypertext. Many editors provide a what-you-see-is-what-you-get (WYSIWYG) way to create and edit HTML files, without actually having to type the individual HTML marker tags which define the position and style of item in each web page. Such HTML editors comprise an application program software package which needs to be loaded onto the computer. The editor establishes a database of HTML files that can be edited and amended using a viewer. The relationship between the individual pages of the web can be displayed graphically.

One example of an HTML editor is FrontPage by Microsoft Corporation. This provides a viewer which allows features such as hyperlinks and graphics to be dropped onto a web page without having to write lines of code in HTML. The editor is provided with a database for storing the web pages and the links between them produced when using the viewer. When a web site has been created using FrontPage, the resulting HTML code can be uploaded to a server from the editor's database. Other HTML editors include PageMill by Adobe Corporation, for use with Macintosh hardware and Webmaster Pro from HeyerTech Inc.

Although HTML editors such as FrontPage, enable high quality web sites to be produced in HTML, the use of the editor requires a certain amount of training and the editor needs to be purchased as an additional package which is loaded onto the computer as an application program, to provide the viewer, the database and other functionality. Such editors enable relatively large web sites to be created and maintained effectively but they are not particularly suited to creating and editing relatively small web sites, making them unattractive for example, to users who wish to establish a personal web site or small business users who wish to establish a relatively small web site. They also do not allow for different remote users to update the website.

According to the invention there is provided a method of changing hypermedia in a web site that comprises hypermedia produced from data organised in a hierarchical file structure with hyperlinks therein corresponding to the hierarchy of the file structure, comprising: constructing an electronic mail message addressed to a computer configuration that supports the web site, the message including web page data corresponding to information to be included in the web site, together with predetermined file location data for placing the web page data into a predetermined position in said hierarchical file structure, electronically mailing the message to the computer configuration such that the web page data is included in said hierarchical file structure according to the file location data, and converting the web page data into hypermedia for the web site with hyperlinks corresponding to the hierarchy of the file structure.

Instruction data may be included in the mail message defining how it is to be treated in the web site.

The message may be constructed by activating a hyperlink on a web page in the web site so as to open an e-mail client to create an e-mail pre-addressed to the computer configuration, with the file location data corresponding to the predetermined hierarchical position for the web page data in the file structure, included therein.

The converting of the web page data into hypermedia may be performed by a conversion module which converts the file contents into hypermedia with hyperlinks corresponding to the hierarchy of the file structure. The module may be run periodically to include web page data from a plurality of said mail messages received at different times by the computer configuration and the mail messages may be queued at the computer configuration prior to conversion into hypermedia.

The invention independently includes a method of mailing the e-mail containing the web page data and the file location data to the computer configuration.

The invention also provides independently a method of updating the web site using the received e-mail.

In another aspect the invention provides a web site that comprises hypermedia produced from data organised in a hierarchical file structure with hyperlinks therein corresponding to the hierarchy of the file structure, comprising: a hyperlink on a web page in the web site operable to open an e-mail client to create an e-mail pre-addressed to a computer configuration that supports the web site, the e-mail including the file location data corresponding to the predetermined hierarchical position for the web page data in the file structure, whereby web page data corresponding to information to be included in the web site may be included by a user in the e-mail, the computer configuration being configured to receive and process the e-mail such that the web page data is included in said hierarchical file structure according to the file location data, and the web page data is converted into hypermedia for the web site with hyperlinks corresponding to the hierarchy of the file structure.

The invention further includes software to be run on the computer configuration to provide the aforesaid web site.

The web site hypermedia content may be initially created prior to being changed by means of the mailed data, by making use of a computer configuration that has an operating system wherein files are configurable in a hierarchical structure and the operating system is provided with a viewer that provides a visual display of the hierarchical structure and an indication of the file content, the viewer of the operating system being utilised to establish a hierarchical structure of files corresponding to content for the web site, and running a conversion program module to convert the file contents into hypermedia for the web site with hyperlinks therein corresponding to the file structure.

The hierarchical file structure may include file folders and at least one of the folders may contain a template file defining a predetermined configuration for hypermedia at a node in the web site corresponding to the folder, and the conversion program module produces a web page corresponding to the template for the node.

In order that the invention may be more fully understood an embodiment thereof will now be described by way of example, with reference to the accompanying drawings in which:
Figure 1 is a schematic illustration of client and server workstations connected in a network;
Figure 2 is a schematic illustration of the software running on workstation PC 1a of Figure 1;
Figure 3 is a schematic illustration of a hierarchical file structure provided by the operating system shown in Figure 2;
Figure 4 is a schematic flow diagram of the steps involved in generating hypermedia for a web site on PC 1a, in accordance with the invention;
Figure 5 is a screen shot of the hierarchical file structure for the web site when viewed with a file viewer;
Figure 6 is a schematic illustration of a node page of the web site and viewed in a browser, together with a corresponding partial view of the file structure when viewed in the file viewer as per Figure 5;
Figure 7 is a schematic illustration of the home page of the web site when viewed in the web browser;
Figure 8 is a schematic illustration of a file classification process which occurs at a node when producing hypermedia for the web site from the file structure;
Figure 9 is a schematic illustration of the process carried out to apply a node template to a folder of the file structure;
Figure 10 illustrates how a text document template is applied to individual files in the folder;
Figure 11 illustrates how a plugin in the template is processed in order to create a HTML corresponding to the template;
Figure 12 illustrates how a graphics file is located and inserted;
Figure 13 illustrates in more detail how a plugin for a document file is processed;
Figure 14 is a process diagram for link templates;
Figure 15 is a schematic flow diagram for uploading the hypermedia produced by the conversion program to a specified site in the network;
Figure 16 is a schematic block diagram of the process steps for mailing web page data to the website by a remote user;
Figure 17 is a schematic illustration of a web page corresponding to the breakfast menu folder 40 shown in Figure 5, with mail hyperlinks;
Figure 18 is a schematic illustration of a web page corresponding to the snacks folder 39 shown in Figure 5, with mail hyperlinks;
Figure 19 is a screen shot of a mail client for adding a new folder;
Figure 20 is a screen shot corresponding to Figure 19, with new web page data added to the mail message;
Figure 21 is a screen shot of a mail client for adding a comment file;
Figure 22 is a screen shot corresponding to Figure 21, with web page data for the comment file added;
Figure 23 is a screen shot of a mail client for adding a new document to the web site;
Figure 24 corresponds to Figure 23, with the new document attached; and
Figure 25 is a schematic flow diagram of the process steps carried out upon receipt of the e-mail containing new web page data.

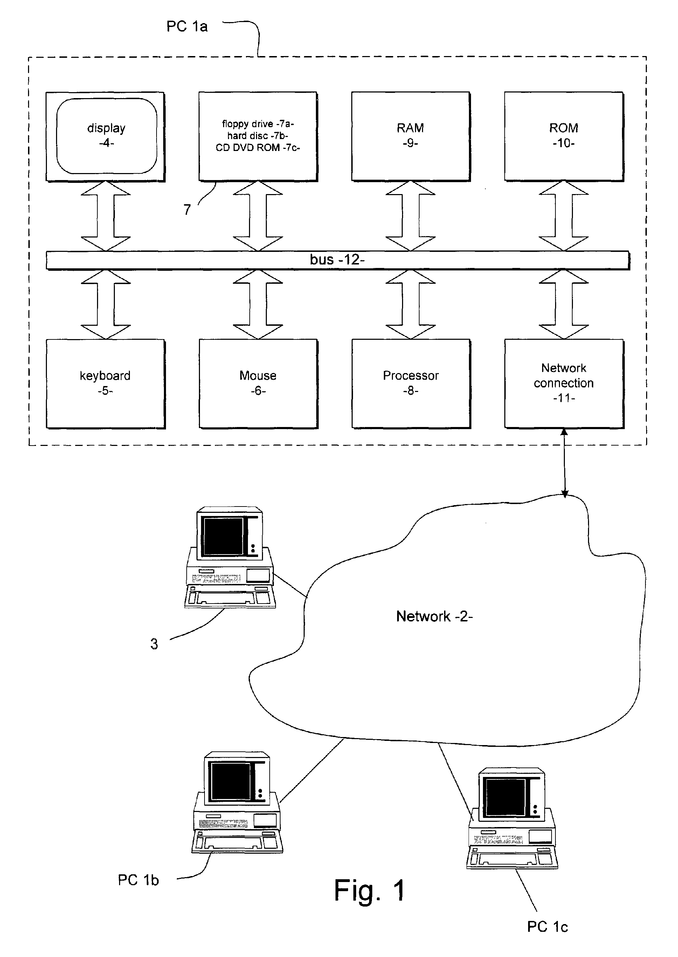

Figure 1 illustrates a conventional network in which a plurality of client workstations in the form of personal computers (PCs) 1a, 1b, 1c are connected by means of a network 2 to a server 3 which may also be a PC or a dedicated server, as well known in the art. The network 2 may comprise the world-wide web (WWW) a LAN or a WAN.

The basic components of PC 1a are shown in schematic block diagrammatic form. PC 1a comprises a screen 4 such as a cathode ray tube or plasma display, keyboard 5, mouse 6, a storage device 7, typically a floppy disc drive 7a, a hard disc 7b, a CD or DVD ROM drive 7c, processor 8, RAM 9, ROM 10 and network connections 11 such as a modem or ISDN interface or, if the network is a local network a suitable network card. The aforementioned components are interconnected by a common bus 12 as well known in the art.

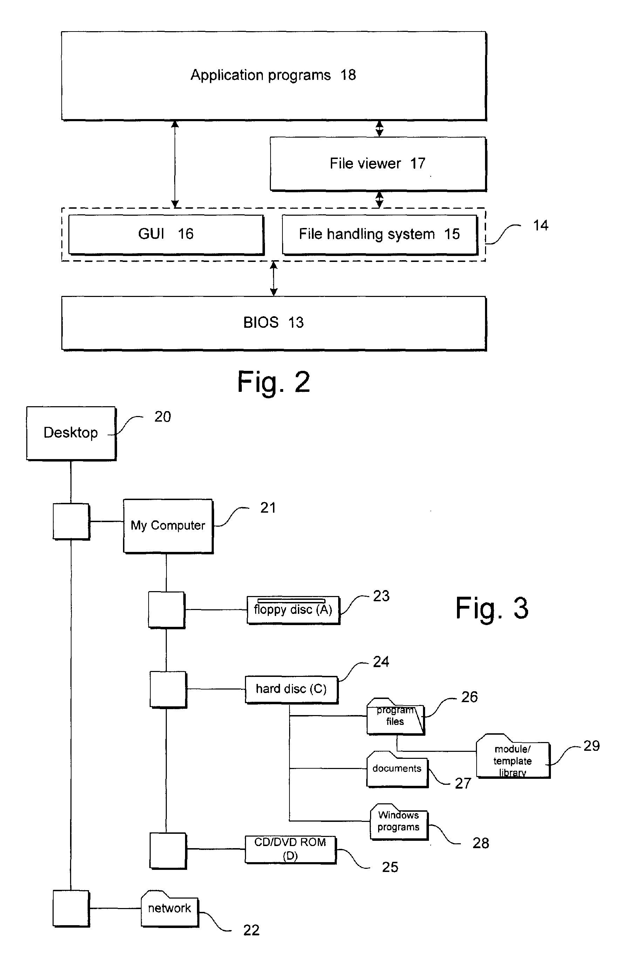

A schematic illustration of the software running on the PC is shown in Figure 2. As well known in the art, a basic input output system (BIOS) 13 provides information interchange between the various components of the PC 1a shown in Figure 1. An operating system 14 controls operation of the BIOS 13. The operating system includes a file handling system 15 and a graphical user interface (GUI) 16. An example of such an operating system is Microsoft" Windows e.g. Windows 98™.

As well known in the art, programs and data are arranged in files, which are grouped in directories referred to herein as folders. The file handling system 15 of the operating system 14 allows files to be organised in a hierarchical structure. This structure can be viewed using a file viewer 17 associated with the operating system 14. The file viewer 17 in one example comprises Microsoft Windows Explorer that is supplied with the Windows 98™ operating system.

The operating system 14 allows application programs 18 to be run on the computer. As well known in the art, the application programs can take a multiplicity of different forms. For example, the application programs may include a wordprocessor such as Microsoft Word™ or programs written by other software suppliers. Also, spreadsheet programs such as Microsoft Excel ™ and presentation programs such as Microsoft Powerpoint™ can be run as application programs 18. The application programs can also include a web browser such as Microsoft Internet Explorer 5 or Netscape Navigator. As known in the art, these browsers are used to display hypertext media derived from web sites e.g. from web sites at the server 3 shown in Figure 1.

A schematic illustration of a hierarchical folder and file structure for PC 1a is shown in Figure 3. At the top of the hierarchical structure is a folder 20 labelled "Desktop". This provides an overview of the files that are accessible by the PC 1a. Beneath the top of the hierarchical structure is a lower level of folders or subfolders, shown to the right of folder 20, comprising folders 21 and 22. Folder 21 is referenced "My Computer" and contains all of the files held locally on the PC 1a. Folder 22 includes details of the folders available through the network 2 shown in Figure 1.

The next lower level in the hierarchical structure comprises subfolders 23, 24 and 25. The folder 23 comprises files held on a floppy disk when inserted into the floppy disk drive 7a of Figure 1. Folder 24 is a repository for files held on the hard disk 7b shown in Figure 1 and folder 25 is a repository for files available through the CD/DVD ROM drive 7c of Figure 1.

With reference to the folder 24, the next lower level comprises folders 26, 27 and 28 which respectively contain program files, documents and programs for running Microsoft Windows™ . Each of the folders 26, 27 and 28 itself contains subfolders and each of the subfolders contains individual files which may comprise programs or documents or other data.

Program file folder 26 is shown to have a subfolder 29 which contains files for a web site conversion program module according to the invention, and an associated template library as explained in more detail hereinafter.

This general, hierarchical structure of folders is well known in the art and the configuration shown in Figure 3 comprises a typical example of the format used in Microsoft Windows™. The usual file viewer 17 of Figure 2 enables a display such as shown in Figure 3 to be produced of the folders and file structure. As well known in the art, file viewers such as Microsoft Windows™ Explorer allow file management to be achieved, by permitting files to be dragged and dropped into the folders shown in Figure 3. The file viewer also allows folders to be opened and named, and provided with subfolders according to a desired hierarchical structure, as well known in the art.

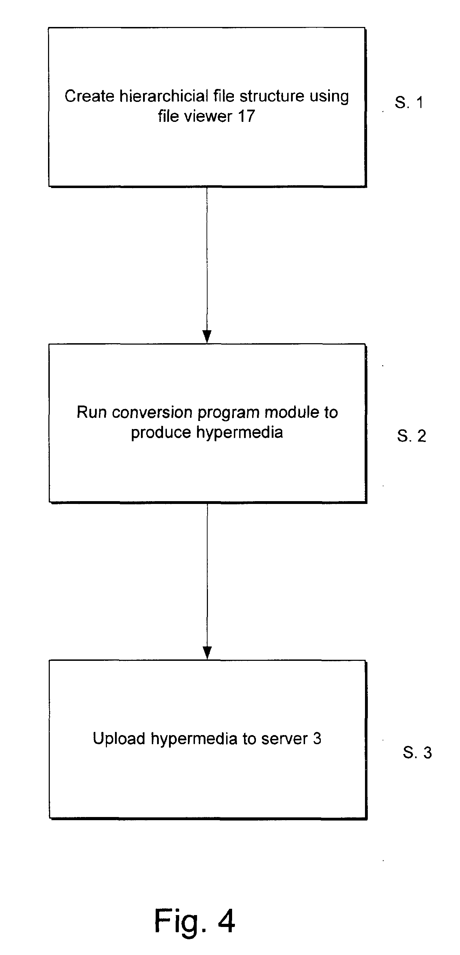

In accordance with the invention, the file viewer 17 is used to establish an hierarchical file structure corresponding to web pages for a web site such that the file content can be converted into hypermedia for the web site with hyperlinks corresponding to the file structure. An overview of the web creation process is given in Figure 4. At step S1, the hierarchical file structure is set up using the viewer 17. Then, at step S2, a conversion program module is run, which converts the file structure established in step S1 into hypermedia, with web pages corresponding to the files of the file structure and links between them corresponding to the hierarchy of the file structure. At step S3, the hypermedia produced by step S2 is uploaded to a server to provide a web site. In the present example, the hypermedia is uploaded to server 3 shown in Figure 1 although it will be appreciated that the web site can be established at any convenient server location including PC 1a itself.

Once uploaded, the web site can be viewed using a web browser as previously described.

### Overview of file structure and web site

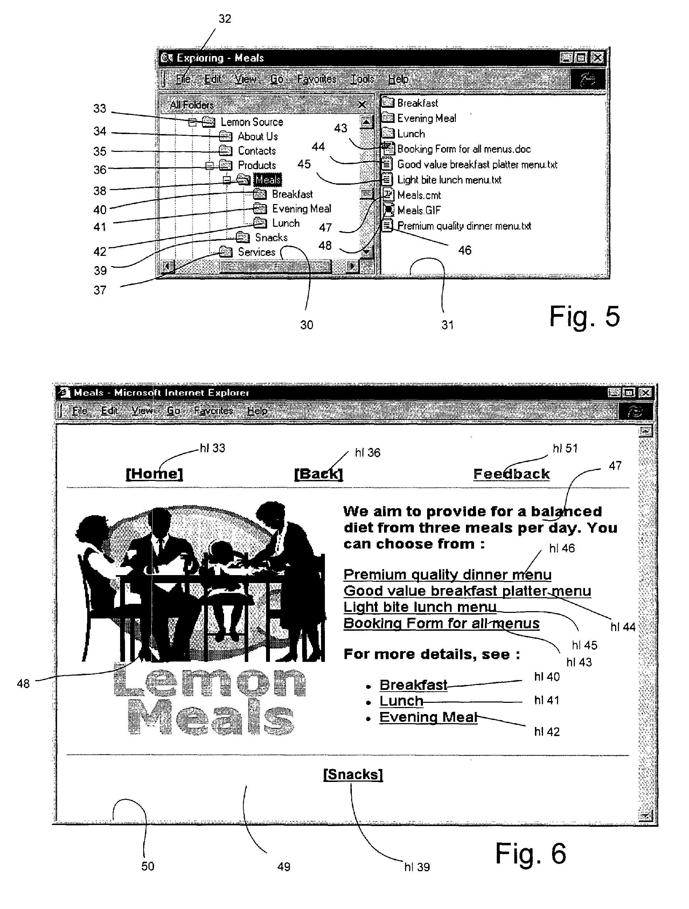

In order to explain the relationship between the file structure established by the viewer 17 and the corresponding web pages, an example will now be given of a web site entitled "Lemon Catering". The web site is configured to offer menus for different meals to a customer, who can use the web site to order a meal selected from the menus. Referring to Figure 5, for step S1, (Figure 4) the file structure for the Lemon Catering web site is set up using the file viewer 17, in this example Microsoft Windows™ Explorer. The hierarchical relationship of the folders that form the basis of the web site, is shown in Figure 5. As well known in the art, the Windows Explorer viewer 17 includes a left hand window 30 that shows the hierarchical folder structure, and a right hand window 31 that shows the individual files included within a particular folder. In the usual way, the files within a particular folder are revealed by clicking on the folder concerned in the left hand window 30 with the mouse, so as to open the folder such that its files are displayed individually in the right hand window 31. As well known in the art, Microsoft Windows Explorer is provided with a drop down menu (not shown) under the button entitled "File", referenced 32, which allows the user to create, edit and delete folders and subfolders so as to create the hierarchical file structure for the web site. This process is well known *per se* to those skilled in the art. It will also be understood that content files for the individual folders can readily be dragged and dropped using the mouse, into individual folders of the hierarchical folder structure shown in window 30. The dragged and dropped files can be obtained from local folders or sub-folders for "My Computer" 21 or from sub-folders for the Network folder 22, or even as downloads from other locations.

The hierarchical folder structure for the "Lemon Catering" web site will now be considered in more detail. It comprises a root folder 33 named "Lemon Source" with the following sub-folders on the next lower level of the hierarchy: "About Us" 34, "Contacts" 35, "Products" 36 and "Services" 37. For the next lower level of the hierarchy, the folder "Products" 36 has associated sub-folders "Meals" 38 and "Snacks" 39.. For the next lower level of the hierarchy, the folder "Meals" 38 has associated sub-folders "Breakfast" 40, "Evening Meal" 41 and "Lunch" 42.

Each folder constitutes a node in the web site and as will be explained in detail hereinafter, gives rise to an HTML web page corresponding to the node, with links to other ones (HTML web pages) of the nodes corresponding to the file hierarchy. Thus the top level folder , referred to herein as the 'root' folder "Lemon Source" 33 corresponds to the Home Page of the web site, and has hyperlinks to node pages corresponding to folders 35 - 39, which in turn have hyperlinks to node pages corresponding to the sub-folders according to the hierarchy shown in Figure 5.

One or more of the folders may contain text files which each provide an HTML web page that has a hyperlink to the node page corresponding to the folder containing the text file. By way of example, the folder "Meals" 38 in Figure 5 is shown open and its contents are shown in the right hand window 31. The folder contents include a word processor text file 43 "Booking Form for all Menus.doc, and text files 44, 45 and 46 corresponding to the text of individual menus. The folder 38 also includes a text file 47 referred to as a comment file with a file suffix ".cmt" with text for inclusion on the node page, and a graphics file 48 for inclusion on the node page, as will be explained later.

Figure 6 is a view of the node web page 49 that is produced from the "Meals" folder 38 when viewed with a web browser. In this example the Microsoft Internet Explorer™ web browser is utilised although others may be used such as the Netscape Navigator™. As will be explained in more detail hereinafter, an HTML template is applied to the contents of folder 38 so as to produce a corresponding node web page. The browser has a viewing window 50 which displays the web page corresponding to folder 38.

The web page 49 includes hyperlinks *hl* corresponding to the hierarchical folder structure. As previously explained, the folder 38 contains files 43-46 (Figure 5) and, in the node web page 49 of Figure 6, hyperlinks *hl*43*-hl*46 are provided to web pages corresponding to the document files 43-46. Thus the hyperlinks *hl*43-*hl*46 can be considered as document links.

The web page 49 also includes hyperlinks which permit the user to move through the hierarchical folder structure. Hyperlink *hl* 33 labelled "Home" provides access to the Home Page of the web site, which in this example corresponds to root folder 33 "Lemon Source" shown in the window 30 of the file viewer 17.

The web page 49 further includes hyperlink *hl*36 labelled "Back" which provides access to the web page corresponding to the next node up in the hierarchical file structure, corresponding to the "Products" folder 36 shown in Figure 5. In terms of the folder hierarchy, the "Products" folder 36 can be considered as a parent for the "Meals" folder 38 and so the hyperlink *hl*36 can be considered as a parent link.

Referring to the window 30 in Figure 5, it will be seen that the "Meals" folder 38 is at one level up in the hierarchical folder structure from the folders 40, 41 and 42, entitled "Breakfast", "Evening Meal" and "Lunch". These folders can be considered in terms of the hierarchy as children in relation to the "Meals" folder 38. In the displayed web page 49 of Figure 6, hyperlinks *hl*40, *hl*41 and *hl*42 are provided to web pages corresponding to the folders 41, 42 and 43 and can be considered as child links.

From Figure 5, it can be seen that the "Meals" folder 38 and the Snacks" folder 39 share a common parent folder "Products" 36 and a hyperlink to the so-called cousin folder 39 is provided in web page 49 in Figure 6 by hyperlink *hl*39, which can be considered as a cousin link.

Also, as shown in Figure 6, a hyperlink *hl*51 which enables the user to e-mail comments in respect of the web page, is provided. The operation of this hyperlink is conventional and will not be described further herein.

It will therefore be understood that the user can navigate through the hierarchical structure of the web site by using the links displayed on each web page, the links being set up in accordance with the hierarchical file structure established using the file viewer 17 associated with the operating system which, in this example, comprises Microsoft Windows Explorer.

### Template files

The "look and feel" of the web pages that make up the web site is determined by template files placed in the file structure. The template files are designed to provide a quick and easy way of applying a uniform look to pages of the web site and template files may be provided in a library so that the user can select a particular look for the web site. As previously explained, the web site is arranged with the links corresponding to the hierarchical structure of the files, but the look of the pages corresponds to the templates placed in the file structure. The content of the pages is thus separate from the look of the pages, and the links are also separate, being derived from the file structure.

Thus, the folders in the hierarchical file structure can be considered as nodes and a template is provided to give each node a particular layout and appearance. Furthermore, a template is provided for document files so that these can be given an individual, common appearance different from the node. The template files comprise a template for the Home Page of the web site, a node template that can be used for each folder shown in the window 30 of Figure 5 and a document template for individual document files corresponding to files 43-46 in window 31 of Figure 5.

The template files are pre-written in HTML and make use of plugins, as will be described in detail later. The user can choose a particular template file configuration from the library and the template files are dragged and dropped using viewer 17 into the Home Page folder namely "Lemon Source" folder 33 shown in Figure 5. In this example, the template files have a suffix **".tpl"** and an example of templates for use at the home page, folders and documents is shown below.

An example of the HTML for the Home page template **lemon.tpl** is as follows:

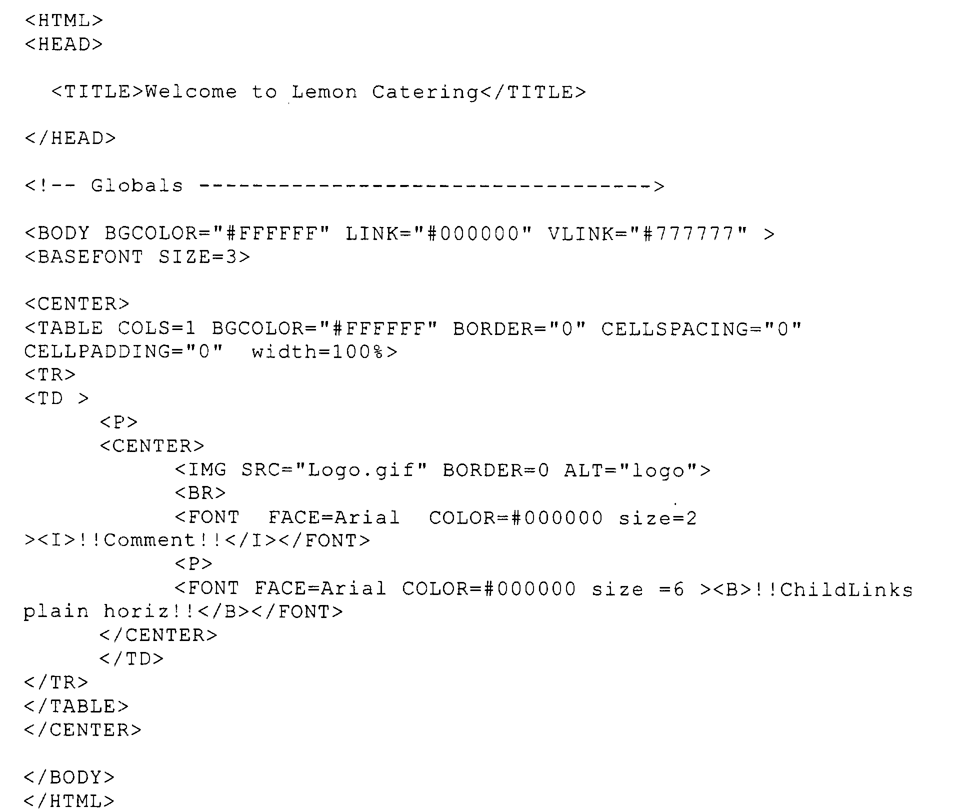

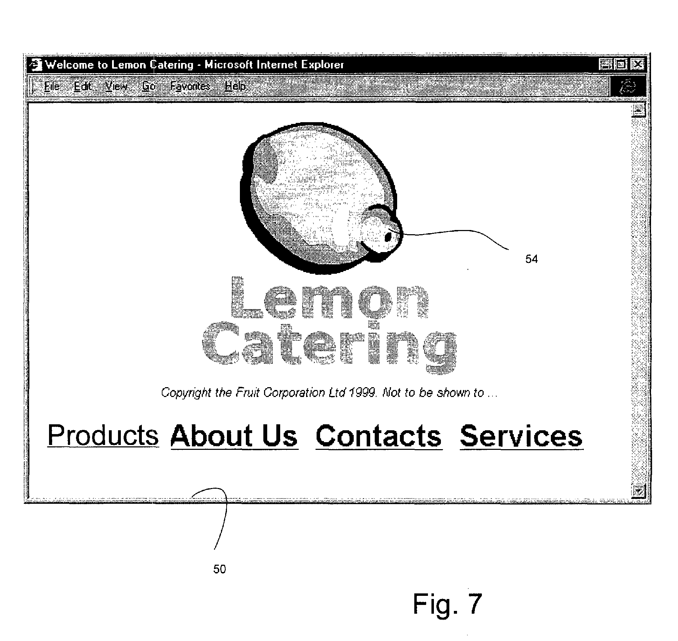

This corresponds to a home page layout as shown in Figure 7.

It will be seen that in the aforementioned template, an image file **Logo.gif** is included. In the existing templates e.g. in the template library, the convention adopted is that the file contains a non-meaningful object and that the templates are configured so that the user can replace the files by bespoke files, for example a company logo or other image information pertinent to the web site concerned. In the example shown in Figure 7, the user has replaced the original non-meaningful **Logo.gif** file by a bespoke lemon logo image file. These changes can be easily made by the user, by dragging, dropping and renaming a suitable image file into the "Lemon Source" folder 33.

HTML corresponding to a template **node.tpl**, which is applied to the node pages, is as follows:

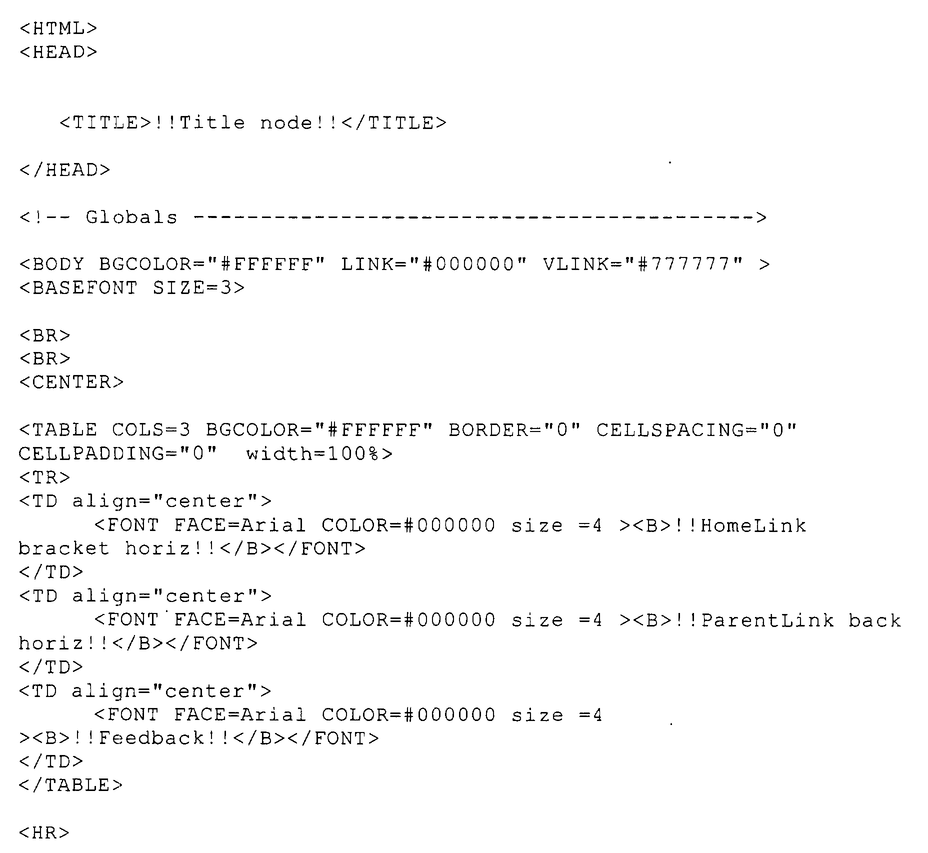

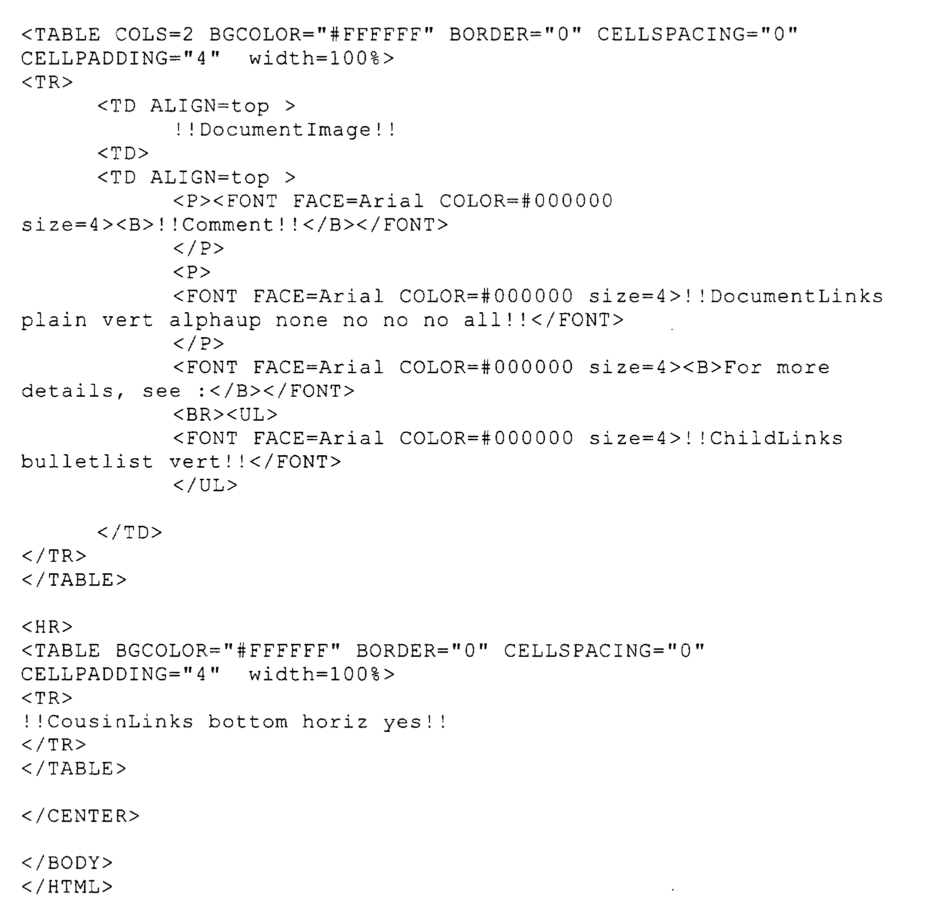

This corresponds to the node page layout as shown in Figure 6.

An example of a template **document.tpl** that can be used for the document files 43-46 is as follows:

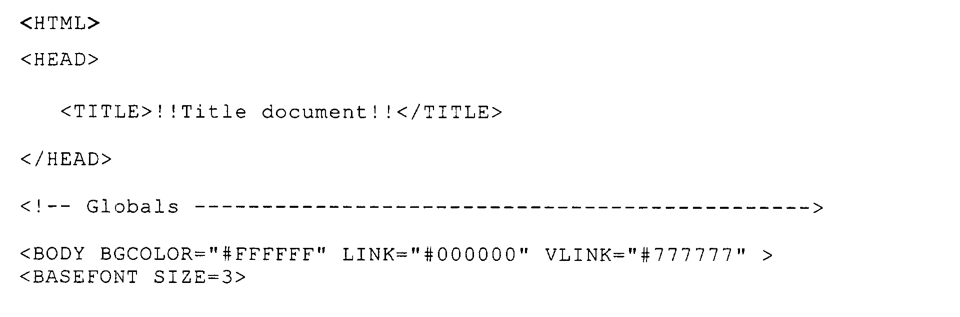

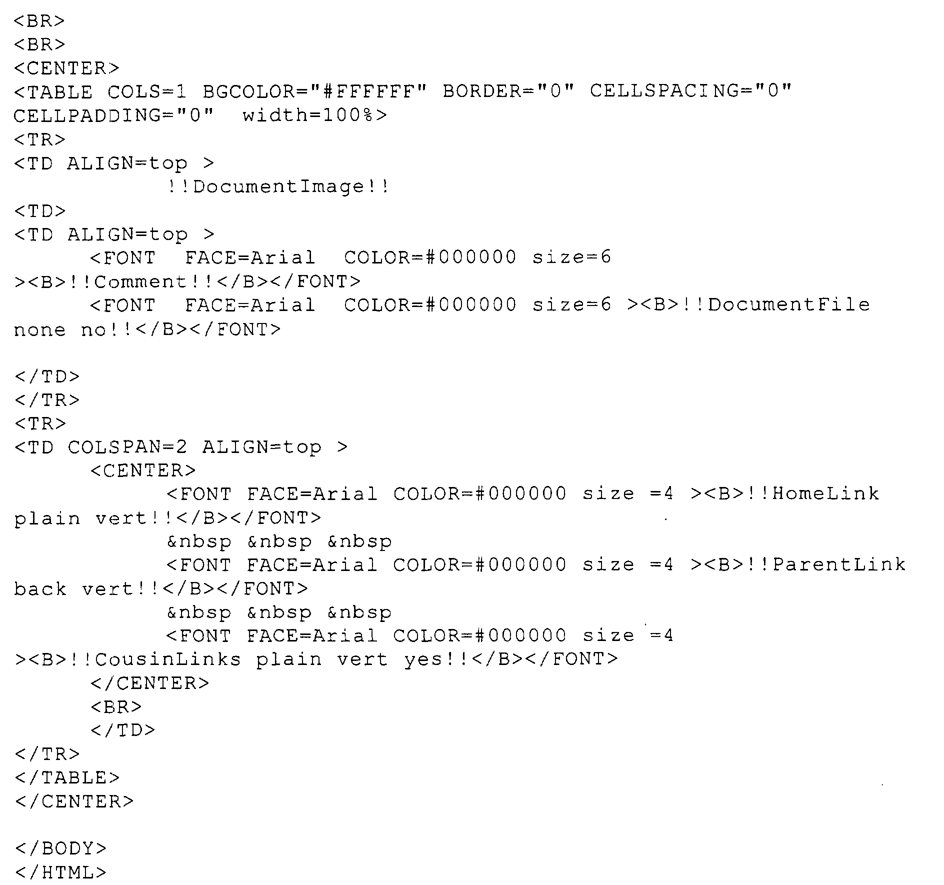

Although not shown specifically in the in the drawings, the look and feel of a web page produced using the document template **document.tpl** is consistent with that of the Home page and node pages produced by the templates **lemon.tpl** and **node.tpl**.

The aforementioned three template files are provided in the root "Lemon Source" folder 33 and act to provide a default look for the entire web site but can be selectively overridden by the user if it is desired to give web pages corresponding to individual nodes or files a different appearance. If a further template is placed in one of the folders, then the further template will then be used to provide the default look for that folder and folders or documents below it in the file structure. This can be achieved, for example for a node, by including an individual node template in the corresponding folder, which will override the hierarchy provided by the node template in the Home Page "Lemon Source" folder 33. Thus, for a user with minimal knowledge of HTML, templates from the template library in folder 29 (Figure 3) provide a quick and easy way of applying a common style to a web site, with the template being selected by the user from the library and dragged and dropped into the root folder of the web site - folder 33 in this example. However, more sophisticated users can adapt and modify individual parts of the web site as desired e.g. by placing different template files in individual folders of the file structure. The template may be individually written in HTML, selected by the user from a library, or downloaded from a remote server, depending on the skill level of the user.

### Conversion program module

As previously described, the conversion program module, which converts the various files and folders shown in window 30 into hypermedia, resides in program subfolder 29 shown in Figure 3.

When the user is satisfied that the hierarchical file structure displayed by the file viewer 17, is satisfactory, the program module is run to convert the file structure into corresponding hypermedia (step S2 of Figure 4). This will now be described in more detail. The program module includes a conventional tree creeper which moves hierarchically downwardly through the file structure, folder by folder, converting the folder contents into corresponding hypermedia, making use of the previously described templates. An example of a suitable tree creeper is given in computer programming algorithm literature, for example:
[http://www.cs.hope.edu/^{~}alganim/ccaa/tree.html]. Other examples of searching routines which can be used for this purpose are described in "Handbook of Algorithms and Data Structures in Pascal and C " Gaston Gonnet, Ricardo Baeza-Yates, Addison Wesley; ISBN: 0201416077, Chapter 3 : Searching Algorithms.

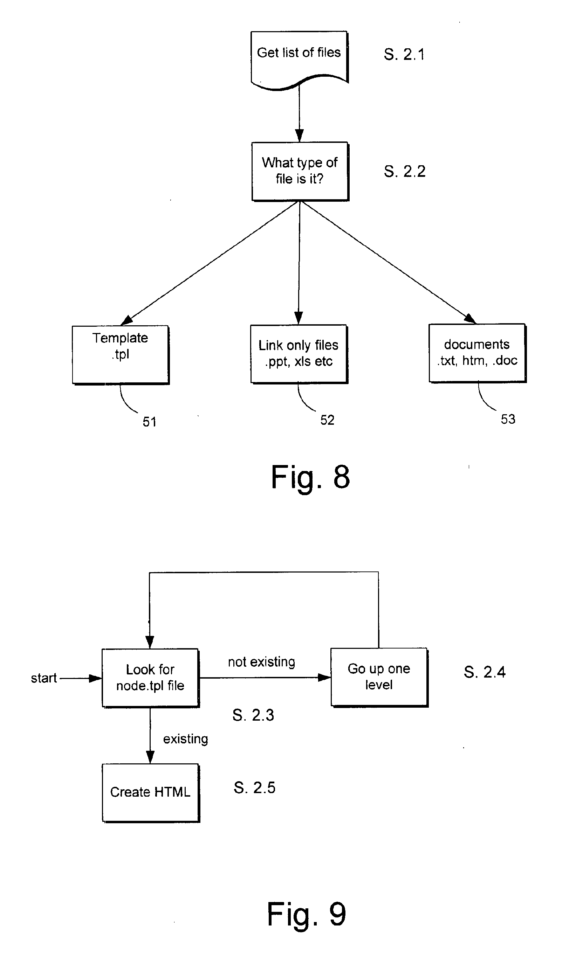

An overview of the process carried out for each folder will now be described. Referring to Figure 8, at step S2.1, all the files of the folder are identified and at step S2.2, classified according to their file suffixes. Files with the **".tpl"** suffix are identified as templates for use in producing the individual web pages. These are shown schematically as block 51. Files which are to be uploaded without conversion to the web site are identified as block 52. For example, files which are in the Microsoft Powerpoint format or other application software files such as spreadsheets, can be loaded to the web site for use as subsequent downloads by users running local copies of the application program rather than browsing by means of a web browser. Text files with the **.txt, .htm** or **.doc** suffix are identified in block 53. These files are subsequently converted using the templates previously described, into HTML for the web site, as will be described in more detail hereinafter.

The various processes carried out at each folder or node will now be described in more detail. Referring to Figure 9, HTML for the node web page is produced using an aforementioned node template. As mentioned previously, the node template can be placed in the relevant folder by the user in order to achieve a particular look for the node concerned. If no node template has been inserted by the user, the node template for the next highest level is used, which can be considered as an "inheritance" of the template, and, if there is no template specified for the next higher level, the routine moves up the file structure so that if necessary, the node template held in the Home Page "Lemon Source" file 33 (Figure 6) is used. Thus, at step S2.3, a search for the node template file in the node concerned is carried out and, if it does not exist, at step S2.4 the search is carried out at a higher level in the file structure and the process is repeated if necessary at higher levels until a suitable node template is found. When the node template is found, it is then used to create HTML as shown at step S2.5. The HTML comprises in effect the menu page associated with the node or folder, of the type shown and described in relation to Figure 6, with a set of hyperlinks to child topics, its parent node and the Home Page, as specified by the template.

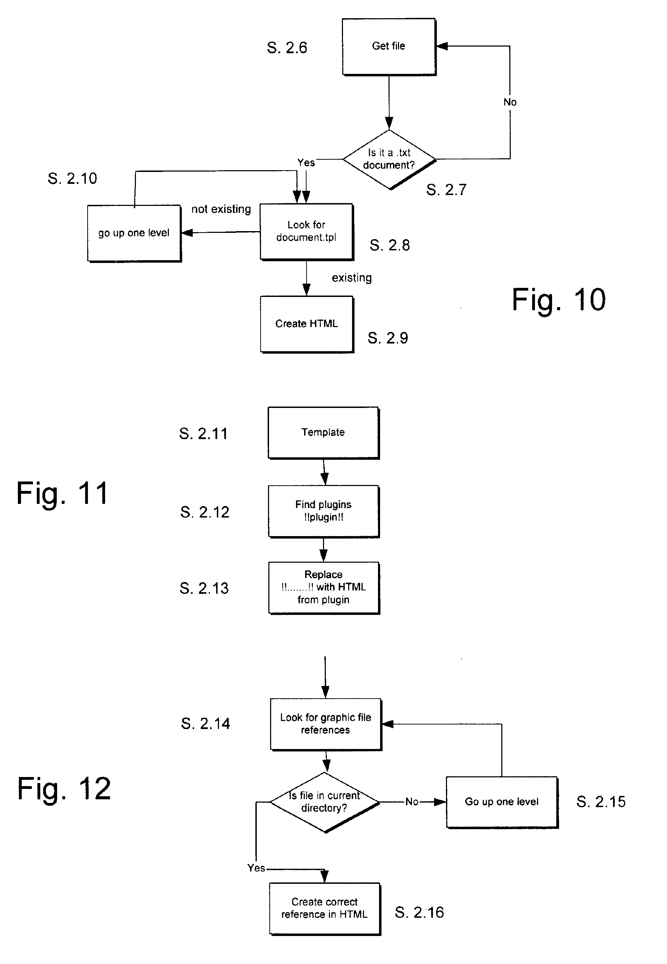

Figure 10 illustrates the process carried out to convert document text files (block 53 of Figure 8) into corresponding HTML for inclusion as web pages in the web site. At step S2.6, an individual file is reviewed from the list of files obtained at S2.1 (Figure 8). At step S2.7, the file is reviewed to determine whether it is a text document i.e. with a suffix **.txt.** If not, the next file is obtained at step S2.6. When **.txt** file is located, a corresponding document template is sought at step S2.8. As previously described, document templates **document.tpl** can be placed in a particular node (folder). If however no document template is provided, the process goes back up one level of the hierarchical file structure at step S2.10 to seek a corresponding document template and the process is repeated until an appropriate template is found. This provides a default template at a higher level in the file structure, which can be selectively overridden by the user in the event that a particular template is required at a particular node, or for a particular document. The overriding is achieved by the user placing a bespoke document template in the folder containing the document concerned.

The corresponding HTML is then created using the template, at step S2.9. As well known in the art, the creation of HTML is achieved by applying HTML tags from the template document to the text of the file obtained at step S2.6. Thus, the text is marked up so as to take up the attributes prescribed by the HTML tags.

It will be understood that corresponding routines for different text file types can be used. Thus a corresponding routine can be run for text documents produced in Microsoft Word™ with step S2.7 checking to see if the documents have a file suffix **.doc** signifying a Word text file.

### Plugins

Plugins can be used in the HTML of each of the different types of templates in order to insert particular information into the corresponding web page. The plugins are identified in the HTML code by **!!xxx!!.** The instruction given within the exclamation marks causes data to be fetched and inserted in the relevant place in the web page produced by the template. Examples of plugins are set out in Table 1 below and examples of the use of such plugins is given hereinbefore in the HTML snippets corresponding to the templates **lemon.tpl**, **node.tpl** and **document.tpl.**

**Table 1**

| !!Author!! | | |
|---|---|---|
| Inserts text representing details of the web site's author, as optionally specified in an .ini configuration file. | (takes no parameters) | |

| !!ChildLinks <link> <dir>!! | | |
|---|---|---|
| Inserts HTML code representing a list of links to the menu (node) URL for each sub-folder leading from the current folder | <link> | This specifies the HTML formatting which should be used with the link |
| | plain | creates a standard textual hyperlink. |
| | image | creates an image-based hyperlink, using an image of the same name as the destination folder. |
| | table | creates cells within a table containing one textual hyperlink in each cell (designed to easily create button bars). The table itself should be defined manually in the template file. |
| | tablewithimages | creates a table as above but uses image-base hyperlinks. |
| | ... | any other entry specifies a link template which can contain any other desired HTML formatting. |
| | <dir> | This specifies the direction in which a list of links should run. This parameter will have no effect if there is only a single link to create. |
| | horiz | includes formatting to create a horizontal list |
| | vert | includes formatting to create a vertical list |

| !!Comment!! | | |
|---|---|---|
| Inserts the full textual content of one or more comment files. • If used within a node template, this plugin will insert the contents of all files with the . cmt extension which do not have the same names as document files. • If used within a document template, this plugin will insert the contents of the single . cmt file with the same name as that document. The plugin will add HTML paragraph formatting to the text content unless HTML formatting tags are already present. | (takes no parameters) | |

| !!CousinLinks <link> <dir> <exclude>!! | | |
|---|---|---|
| Inserts HTML code representing a list of links to the menu (node) URL for all folders which have the same parent as the current folder | <link> | See above explanation. |
| | <dir> | See above explanation. |
| | <exclude> | This specifies whether the current folder (or document) should be included in the list being created. |
| | yes | omit the current folder (or document) from the list |
| | no | include the current folder (or document) in the list |

| !!CurrentDate <format>!! | | |
|---|---|---|
| Inserts text representing the current system date. | <format> | This specifies the format in which the date should be included. |
| | digit | gives the date in a short format : 30/9/99 |
| | text | gives the date in a longer format : Monday 30th September 1999 |

| !!CurrentTime!! | | |
|---|---|---|
| Inserts text representing the current system time. The time is given in the format : 12:30. | (takes no parameters) | |

| !!CurrentPath!! | | |
|---|---|---|
| Inserts text representing the filing system path to the current document or folder. This is normally used to assist additional applications which may wish to modify a site. | (takes no parameters) | |

| !!DocumentFile <datetime> <summary>!! | | |
|---|---|---|
| Inserts the textual content of a document file. The plugin will add HTML paragraph formatting to the text content unless HTML formatting tags are already present. This plugin will only produce output when placed inside a document template. | <datetime> | This specifies whether the date and/or time stamp of the file should be included before it's content. |
| | none | includes no date or time information |
| | dateonly | includes just the date in a long format : 30 September 1999 |
| | timeonly | includes just the time in the format : 12:30 |
| | datetime | includes a both the date and time in a long format: 30 September 1999 12:30:00 GMT |
| | <summary> | This specifies whether a Prosum summary of the document should be included instead of the full version. |
| | yes | include a summary |
| | no | include the full textual content |

| !!DocumentImage!! | | |
|---|---|---|
| Inserts HTML code representing a graphical image. If used within a node template, this plugin will insert a reference to an image which has the same name as the current folder. If used within a document template, this plugin will insert a reference to an image which has the same name as the current document. | (takes no parameters) | |

| !!DocumentLinks <link> <dir> <sorttype> <datetime> <summary> <exclude> <recurse> <select>!! | | |
|---|---|---|
| Inserts HTML code representing a list of links to document files of all types in the file structure below and including the current folder. | <link> | See above explanation. |
| | <dir> | See above explanation. |
| | <sorttype> | This specifies the order in which links should be listed. |
| | none | links are not sorted in any order. |
| | alphaup | links are arranged in alphabetical order according to the name of the document file. |
| | dateup | links are arranged in reverse chronological order (newest first) according to the time stamp of the document file. |
| | datedown | links are arranged in chronological order (oldest first) according to the time stamp of the document file. |
| | <datetime> | See above explanation. |
| | <summary> | See above explanation. |
| | <exclude> | See above explanation. |
| | <recurse> | This specifies whether the list should include documents from only the current folder, or from the current folder and all sub-folders leading from the current folder to the bottom of the file structure tree |
| | yes | include documents from the current folder and all it's sub folders. |
| | no | include documents from only the current folder. |
| | <select> | This specifies whether particular documents should be included in the list based upon their date stamps. |
| | all | include all documents, regardless of date stamp. |
| | olderthandays=n | include only documents whose date stamp indicates they are more than n days old, when compared with the system date. |
| | newerthandays=n | include only documents whose date stamp indicates they are less than n days old, when compared with the system date. |
| | eldestdocs=n | include only the n documents with the eldest date stamps |
| | newestdocs=n | include only the n documents with the newest date stamps |

| !!ExtraPageLinks <link> <dir> <(text=)url> <check>!! | | |
|---|---|---|
| Inserts HTML code representing a single link to a specific URL either internal or external to the web site. | <link> | See above explanation. |
| | <dir> | See above explanation. |
| | < (text=) url> | This specifies the actual URL and, optionally, the text which should represent it in a textual link. text should be replaced by the text for the link (if used) url should be replaced by either : • the fully-qualified URL for the external page : http://www.bt.com • the name of an additional template file in the web site : whatsnew.tpl If a template file is specified, it is assumed to reside in the current folder unless a tilde is placed before the name (eg. ~whatsnew.tpl), in which case it is assumed to reside in the root directory of the web site. |
| | <check> | This specifies whether the plugin should check whether the URL exists before including it |
| | yes | Only insert the HTML code if the external link or the template file exists |
| | no | Insert the HTML code for the link regardless |

| !!Feedback!! | | |
|---|---|---|
| Inserts a link to the email address of the web site's author, as optionally specified in an . ini configuration file. | (takes no parameters) | |

| !!HomeLink <link> <dir>!! | | |
|---|---|---|
| Inserts HTML code representing a link to the menu (node) URL for the home page of the site, at the root of the file structure. | <link> | See above explanation. |
| | <dir> | See above explanation. |

| !!ParentLink <link> <dir>!! | | |
|---|---|---|
| Inserts HTML code representing a link to the menu (node) URL for the parent folder of the current folder. | <link> | See above explanation. |
| | <dir> | See above explanation. |

| !!Preload <text> ... !! | | |
|---|---|---|
| Inserts a comma-separated list of files from the current folder, with each file enclosed in single quotes. This is normally used to assist pre-loading of images by JavaScript code. | <text> | All files containing this segment of text within their names will be included in the list. Any number of text segments can be included as parameters. |

| !!Title <type>!! | | |
|---|---|---|
| Inserts text corresponding to the title of the current folder or document (without extension), | <type> | This specifies which title to include. |
| | node | include the name of the current folder (node) |
| | document | include the name of the current document file (only in a document template) |

A process for creating HTML from a template containing plugins is illustrated in Figure 11. When a template is being parsed at step S2.11 and found to contain a plugin, at step S2.12, then the entire reference to the plugin is replaced, including the exclamation marks, by new HTML that corresponds to the function defined by the plugin, at step S2.13, according to the rules set out in Table 1.

A process for handling graphical file references will now be described with reference to Figure 12. If the template contains graphic file references, i.e. references to files with the suffix **.gif** or the like, a search is carried out for them at step S2.14. The search is initially carried out in the current folder and if not located, the search moves up one level in the hierarchical folder structure. This search process is repeatedly carried out at higher levels until the corresponding file is found, as illustrated by step S2.15. At step S2.16, the graphic is inserted into the web page. For example, considering the Home page shown in Figure 7, the HTML template **lemon.tpl** given above includes reference to "Logo.gif". This file is included in the "Lemon Source" folder 33 and results in the image 54 being included in the Home Page shown in Figure 7. If any of the node templates refer to "Logo.gif" then the file is located and inserted into the corresponding HTML for the node according to the process shown in Figure 12.

Also the plugin **!!DocumentImage!!** can be used to import a graphical file into HTML produced by a template. When used in a within a node template, this plugin will insert a reference to an image which has the same name as the current folder. By way of example, referring to Figure 6, the plugin **!!DocumentImage!!** is used in the template **node.tpl** with the result that the file "meals.gif" 48 which has the same name as the folder Meals 36 produces a corresponding image 48 in the displayed web page 49 shown in Figure 6. When used within a document template, for example **document.tpl** above, the plugin **!!DocumentImage!!** will insert a reference to an image which has the same name as the current document.

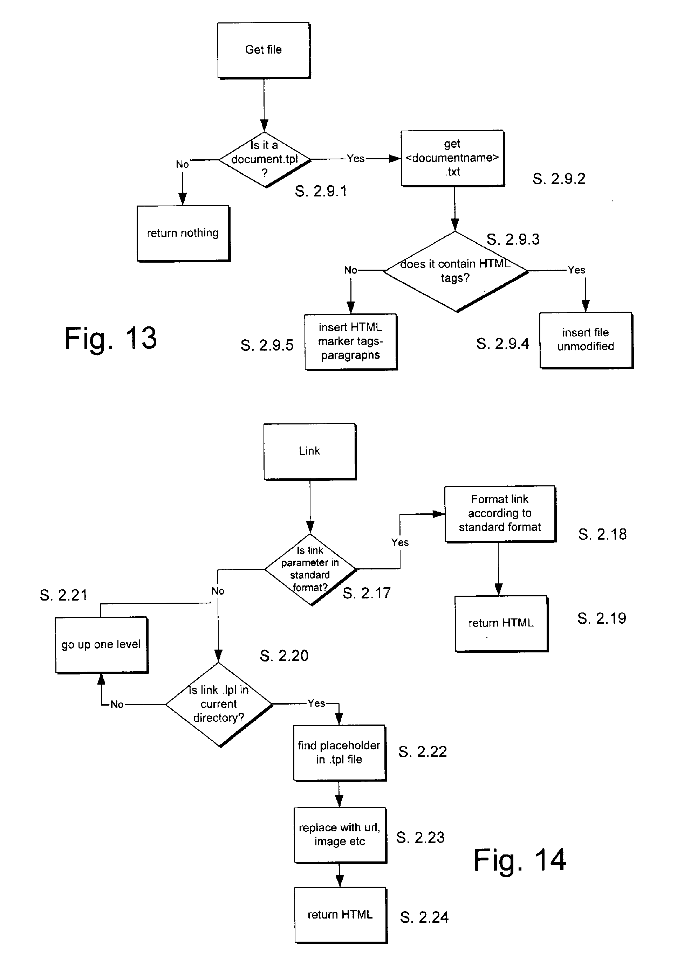

As previously described, the document template document.tpl produces individual web pages for documents held within the folder. The plugin **!!DocumentFile (parameter list)!!** specified in Table 1 is configured to take the text of a particular document file and insert it into the web page, replacing the plugin reference in the template. Use of this plugin can be seen in the example of HTML for the template document.tpl given above. When the plugin **!!DocumentFile(parameterlist)!!** is included in a document template, an HTML web page can be produced with the format of the template and the content of the document file. This process is illustrated in Figure 13, which can be considered as a more detailed discussion of steps S2.8 and S2.9 shown in Figure 10.

Thus, at step S2.9.1, where a document template is located that contains the plugin **!!DocumentFile(parameterlist)!!**, a corresponding document text file is fetched at step S2.9.2. The document is checked at step S2.9.3 to see whether it contains HTML tags already. If so, the file is inserted together with its HTML tags in its entirety in the location of the plugin in the template, at step S2.9.4. However, if the document file contains text which has not already been marked up e.g. a **.txt** file, suitable HTML paragraph formatting is inserted at step S2.9.5.

As can be seen from Table 1, some plugins are capable of creating the HTML representing a list of items such as hyperlinks to documents (in the case of **!!DocumentLinks(parameterlist)!!).**

### Links and link templates

As can be seen from Table 1, the parameter **<link>** is used in a number of the plugins. This enables hyperlinks to be set up between the web pages according to the hierarchical file structure, by using appropriate plugins as per Table 1 in the aforementioned templates. Thus, for example the plugins **!!Homelink!!, !!CousinLinks!!, !!Parentlink!!** and **!!Childlinks!!** as shown in Table 1 can be used for example as shown in the HTML for the templates **lemon.tpl** and **node.tpl** described above to provide corresponding hyperlinks between pages of the web site in accordance with the hierarchical file and folder structure. In order to provide programming flexibility, fragments of HTML referred to herein as "link templates" can be used to extensibly format the specific information provided by the plugins. Considering for example a plugin which defines a hyperlink, such as the plugin **!!Childlinks<link><dir>!!** shown in Table 1, the link parameter **<link>** allows particular text or and/or an image to be associated with the link as displayed in the resulting web page. In this example, the link templates are stored as files containing HTML fragments, with the suffix **.lpl** and contain instructions that insert the specific information within the fragment, which is then inserted in the web page by the plugin.

Table 1 shows that the link parameter can be in a number of standard forms - the link template allows further flexibility, as described above.

Figure 14 illustrates how the link templates are used to generate HTML. When processing a node or document template, and a plugin with the link parameter is parsed, the link parameter is checked at step S2.17 to determine whether it is in one of the standard forms specified in Table 1. If so, HTML corresponding to the link is formatted according to the standard formats listed in Table 1, e.g. plain, image, table or table with images. This is shown at step S2.18. The corresponding HTML code is outputted at step S2.19.

If, however, a link template is detected at step S2.17, a search is made in the corresponding folder of the hierarchical file structure for the link template at step S2.20. If the link template is not found, the search is carried out at the next level up in the hierarchical folder structure at step S2.21 and the process is repeated at successive higher levels of the structure until the relevant link template is found.

Then, at step S2.22, the link template is examined to determine the specified URL text and image to be associated therewith. At step S2.23, the specific information such as URL, image and appropriate text are inserted into the link template, which in turn is inserted into the relevant plugin so as to produce HTML code as shown at step S2.24.

### Comment files .cmt

As shown in Table 1, the templates may include a plugin entitled **!!Comment!!** which is used to insert text into the web pages. The plugin is used to incorporate text from files with a suffix **.cmt.** The plugin has a different effect for node templates and document templates. When used in a node template, the plugin inserts the contents of all files with the suffix **.cmt** which do not have the same names as document files in the relevant folder. An example of given in Figure 5. The open "Meals" folder 38 includes a comment file entitled **Meals.cmt** 47. The name of this file is thus different from the names of the other text files in the folder, namely files 43 - 46. The plugin **!!Comment!!** in the template file **node.tpl** given above is operative to take the text from the file **Meals.cmt** and insert it at a predetermined location in the HTML corresponding to the node page for the folder Meals 38. This is shown in Figure 6 and the text from the file Meals.cmt 47 is shown at location 47 in Figure 6.

The plugin **!!Comment!!** is used in a different way in document templates. When used in a document template, the plugin will insert the contents of a single **.cmt** file with the same name as the document. This enables comment files to add text to a document in a web page corresponding to the document file.

### Running conversion program - step S2

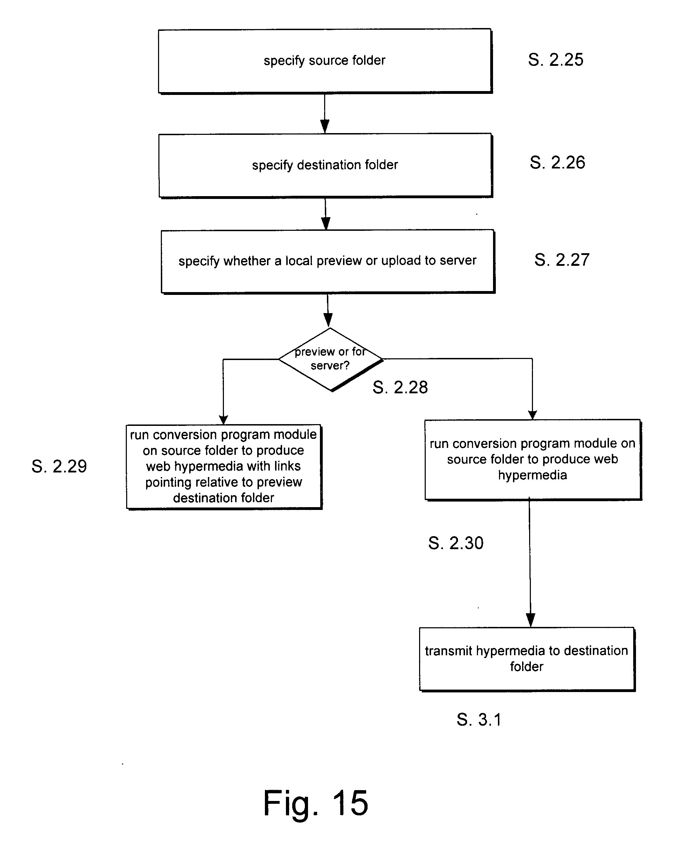

Figure 15 shows the process of running the conversion program in more detail. At step S2.25, the source folder for the hierarchical folder structure is specified. In this example, the source folder comprises root folder 33 "Lemon Source" shown in Figure 5.

At step S2.26 the destination folder for the web site is specified. As previously explained, this can be at any suitable location either on the same computer or at a different location in the network. For example, the destination may be a folder at the server 3 shown in Figure 1.

At step S2.27, the user has the option of producing a local preview of the web site or uploading HTML for the web site to the specified server. The local preview option allows the user to check the web site before recompiling it for uploading to the specified server.

At step S2.28, the system checks to see which option was selected. If the local preview option is selected, the conversion program module is run at S.2.29 and HTML web pages and other associated hypermedia are produced corresponding to the hierarchical folder structure of Figure 5, as previously described, with the hyperlinks pointing to a predetermined local destination folder on the computer that allows a local preview with a web browser. If the user is not satisfied with the web pages, the configuration of the folder structure can readily be amended with the viewer 17 and the preview process repeated until the desired result is achieved.

Then, when ready, the hypermedia can be produced in a form that is suitable for uploading to the destination folder of the server. The option to upload to the server is then selected at S2.27, so that at step S2.30, the conversion program is run and the resulting HTML web pages and other associated hypermedia are produced corresponding to the hierarchical folder structure of Figure 5, with the hyperlinks pointing to the destination folder specified at step S2.26. The hypermedia is then uploaded to the server at step S3.1.

If the user is not fully satisfied with the configuration of the web site, the file viewer 17 can be re-opened and the files or their links can be easily edited. It will be appreciated that the hierarchy of the files can easily be changed using the standard editing functions provided with the file viewer 17. When the user is satisfied with the amendments made, the process of Figure 15 can be run again so that the changes can quickly and easily be incorporated into the HTML code for the web site.

The resulting web pages include hyperlinks, graphics and other information according to the files and templates included in the folder structure of Figure 5. As previously explained, not all of the files will necessarily contain text. Some may contain spreadsheet and presentation files as may be created by Microsoft Excel and Powerpoint. These files need not necessarily be converted into HTML but may be uploaded in a link-only format so that the user can access them by way of downloading the relevant files to a locally held copy of the application program so that the presentation program files or spreadsheets can be run locally as a download. However, the majority of web pages can be displayed using a conventional web browser 50 in the manner previously described.

### Mailing updates to the web site

According to the invention, the hypermedia content of the website can be updated by sending an electronic mail message containing data relating to the updates, to the computer configuration that supports the website. The data is then included in the hierarchical file structure for the web site according to instructions in the e-mail, and thereafter the conversion module is run to convert the data into the website hypermedia.

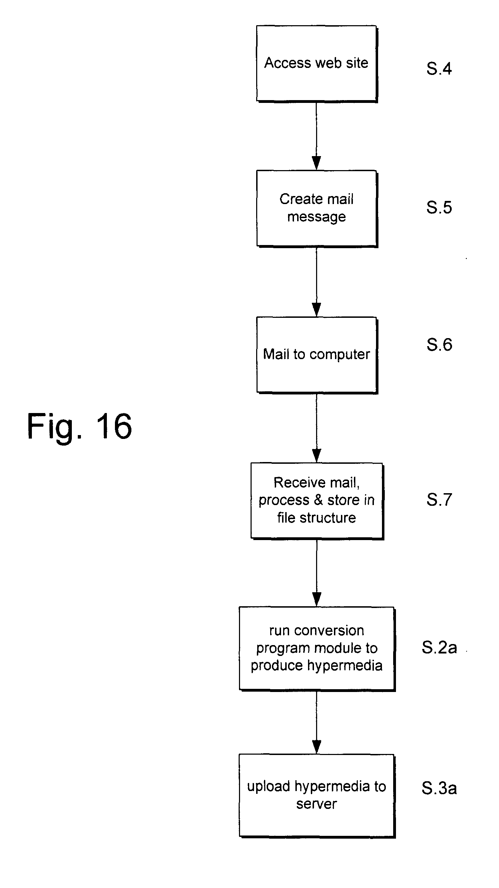

An overview of this process is shown in Figure 16. At step S4, the website is accessed using a browser in the manner previously described. For example, referring to Figure 1, the hierarchical file structure which gives rise to the website resides on PC1a and the PC3 acts as a server for the hypermedia produced from the hierarchical file structure, the hypermedia having been uploaded from PC1a to PC3 as previously described. The resulting website can be viewed by means of a browser on any of the PCs connected to the network 2. For example, PC1c can run a browser to access the website. In this example, it will be assumed that in step S4, the website is accessed by means of a browser at PC1c.

At step S5 in Figure 16, a mail message is created in order to allow a user to mail user-defined updates for inclusion into the website. For example, a user of PC1c can create a mail message and mail it so that updates can be included into the hierarchical file structure residing at PC1a, for subsequent inclusion into the website. The mail message includes data that may comprise ordinary text, graphics and other data not necessarily comprising hypermedia such as instructions that determine the way in which data in the e-mail is processed.

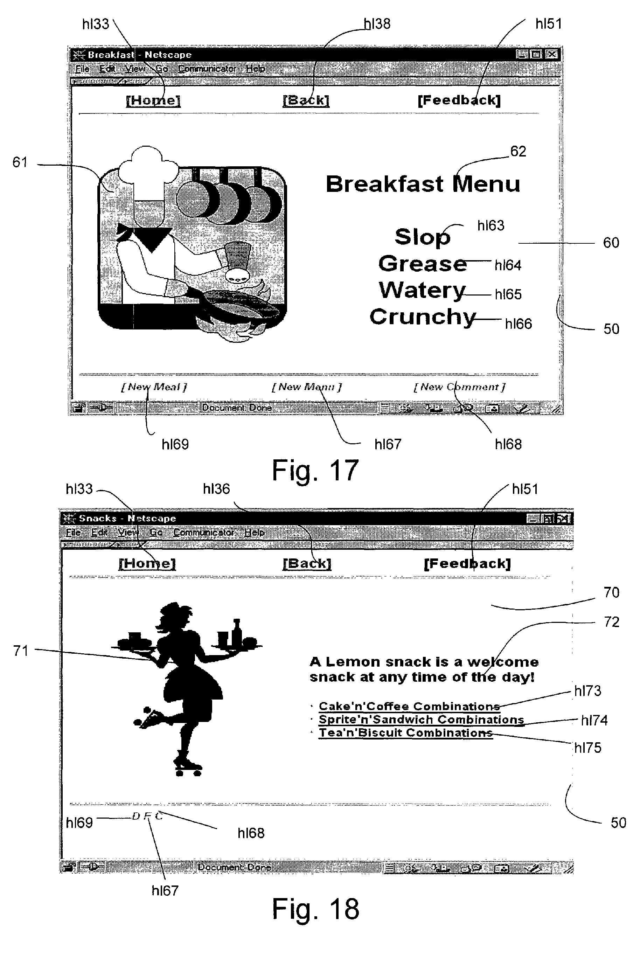

To create the mail message, a hyperlink provided on a relevant page of the website, is actuated so as to open an e-mail client pre-addressed to PC1a, with file location data corresponding to the hierarchical position in the web site that corresponds to the web page. By way of example, Figure 17 illustrates a web page 60 corresponding to the breakfast menu folder 40 shown in Figure 5, when viewed in the browser viewing window 50. The node web page 60 includes a graphical image 61, text 62 - "Breakfast Menu" produced by means of a comment file as previously described, together with hyperlinks *hl63-66* to individual breakfast menu folders under the headings "Slop", "Grease", "Watery" and "Crunchy" which contain respective different groups of individual menus in accordance with the aforementioned headings. The page 60 further includes hyperlinks *hl33*, *38* and *51* to provide "Home", "Back" and "Feedback" functions as previously described with reference to Figure 6.

In accordance with the invention, the node page 60 further includes hyperlinks *hl67*, *hl68* and *hl69*. When one of the hyperlinks *hl67*, *68* or *69* is operated, an e-mail client is opened in order to create a pre-addressed e-mail to allow the user to mail updates to the website. In the configuration of Figure 17, the hyperlinks *hl67*, *68* and *69* are clearly labelled so that their intended purpose is evident to the user. Hyperlink *hl67* permits an additional folder for a new category of Breakfast meal to be included into the hierarchical file structure shown in Figure 5, in addition to "Slop", "Grease", "Watery" and "Crunchy". Hyperlink *hl68* allows a new comment file to be created and placed on the web page 60. Hyperlink *hl69* permits a document containing a new menu to be posted to the node corresponding to breakfast folder 40 shown in Figure 5.

As shown in Figure 18, the mail-creating hyperlinks *hl67*, *68* and *69* need not be clearly labelled on a particular web page. Figure 18 illustrates a web page 70 corresponding to the snacks folder 39 shown in Figure 5, when viewed in the browser window 50. The web page 70 includes a graphics image 71, text 72 corresponding to a comment file and hyperlinks *hl73*, *74* and *75* to folders which each contain documents corresponding to individual menus.

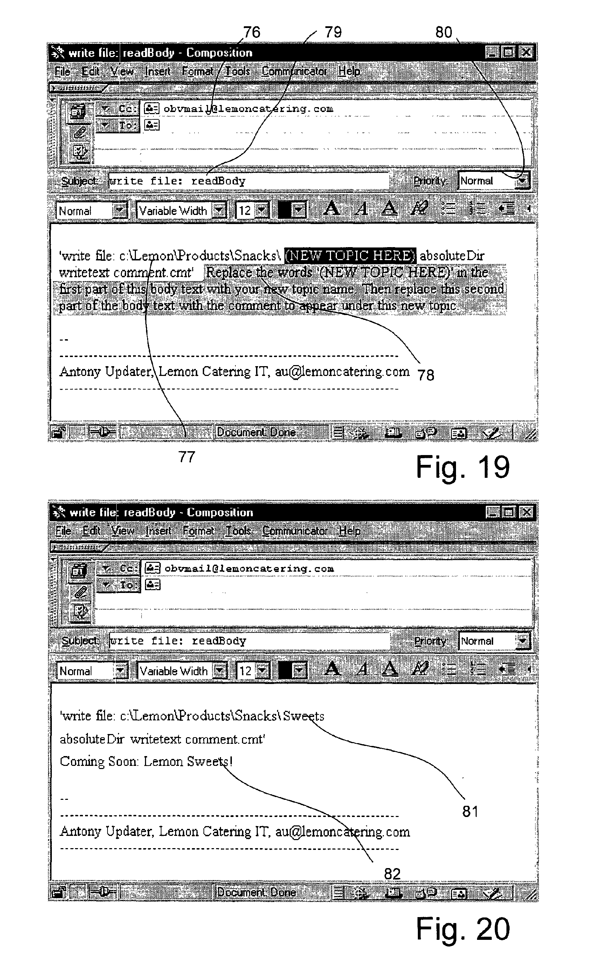

When the folder hyperlink *hl68* is actuated, a mail client is actuated which causes an e-mail message to be opened as shown in Figure 19. The e-mail message is pre-addressed with a mail address 76 corresponding to the location of the hierarchical file structure at PC1a shown in Figure 1. In this example, the address is "obvmail@lemoncatering.com".

The e-mail permits a user e.g. a user of PC1c, individually to define web page data to be included into the website. In this example, instructions contained in the e-mail are provided to set up a new folder or node at the website. For example, the new folder may include a number of menus to be accessed by a new hyperlink additional to *hl73*, *74* and *75* shown in Figure 18. Thus, the folder may include additional menu selections.

The mail message is provided with file location data and instruction data 77 which indicates how the content of the mail message is to be treated in the website and to locate the new folder appropriately in the hierarchical file structure residing at PC1a. The mail message also includes an instruction to the user 78 concerning how to name the new folder and how to provide a comment to be associated with the new folder.

The e-mail also includes the usual subject line 79 and a priority flag 80. These may be prepared automatically as discussed in more detail later.

Figure 20 illustrates the mail message after the user has inserted data 81 to define the new folder, together with a comment 82 to appear under the new topic on the web page i.e. "Coming Soon: Lemon Sweets".

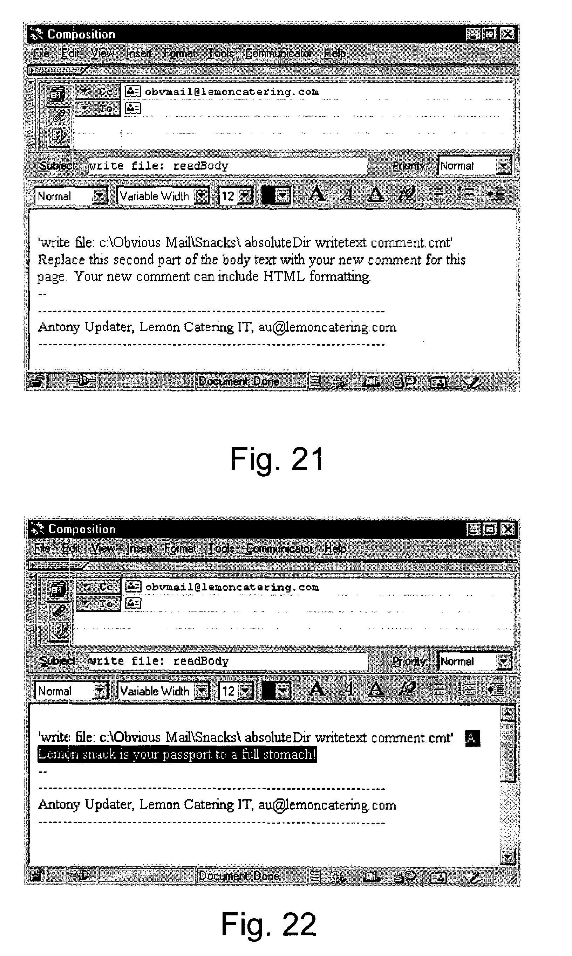

Operation of the hyperlink *hl68* in Figure 18, sets up a mail message to provide a new comment on web page 70, by creating a comment file. The mail message created by operation of hyperlink *hl68* is shown in Figure 21. The mail message is pre-addressed with the same address 76 shown in Figure 19 and also, is provided with file location and instruction data 77, user instructions 78, subject line 79 and priority flag 80.

Figure 22 illustrates the comment mail message when user defined text for the comment file has been set up.

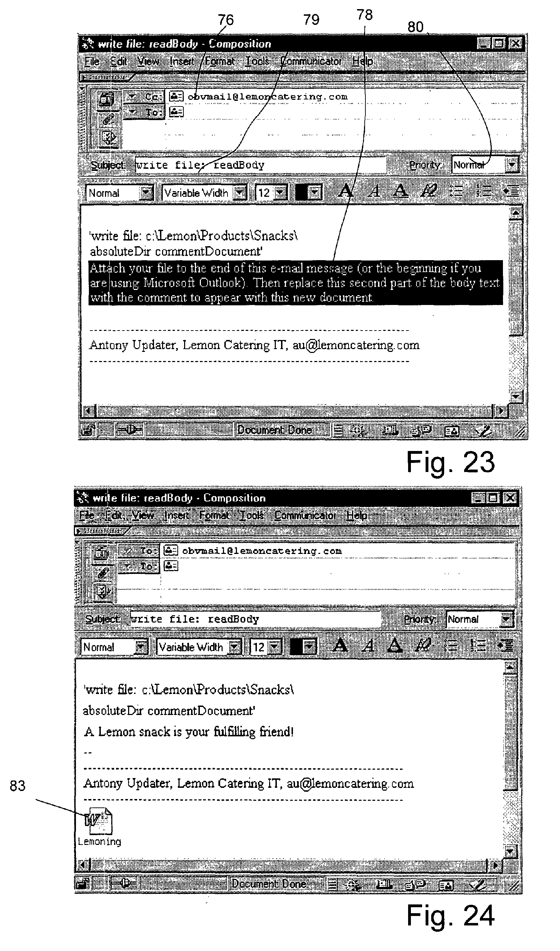

Operation of the hyperlink *hl69* shown in Figure 18 permits a document to be included into the web site, for example a new menu. Operation of the document hyperlink *hl69* produces an instance of the mail client as shown in Figure 23. The mail message is pre-addressed with the address 76 and provided with file location data 77 together with user instructions 78, subject line 79 and priority flag 80. The resulting mail message with an attached document is shown in Figure 24, with an attached text document in Microsoft™ Word™ entitled "lemoning.doc" 83.

The mail hyperlinks *hl67*, *68, 69* shown in Figure 18 call the mail client using the conventional HTML message "mailto". The underlying format for a "mailto" HTML message is 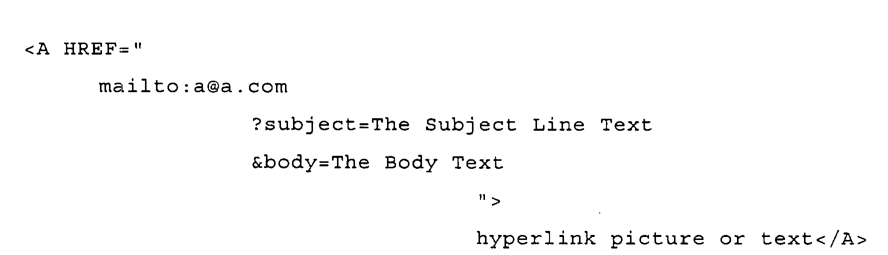 (The lines are split to show the functional blocks and structuring)

In the following, examples are given of the HTML code included in the web page 70 for the hyperlinks *hl67* (New Topic), *hl68* (New Comment) and *hl69* (New Document) respectively. For each hyperlink, three examples of code are given, the first being a generalised version, the second being for use where the hyperlink is triggered by graphics button on the web page 70 and the third by a text link on the web page 70.

### (a) New Topic - hyperlink hl67

### General

<A HREF="mailto:a@a.com?subject=command&body=command">hyperlink picture or text</A>

### Graphics button

<A HREF="mailto:obvmail@lemoncatering?subject=write file:
readBody&body='write file: c:\Obvious Mail\(NEW TOPIC HERE) absoluteDir writetext comment.cmt' Replace the words '(NEW TOPIC HERE)' in the first part of this body text with your new topic name. Then replace this second part of the body text with the comment to appear under this new topic."><IMG BORDER=0
SRC="http://lemoncatering.com/obviousmail/images/newtopic.gif"></A >

### Text link

<A HREF="mailto:obvmail@lemoncatering.com?subject=write file:
readBody&body='write file: c:\Obvious Mail\(NEW TOPIC HERE) absoluteDir writetext comment.cmt' Replace the words '(NEW TOPIC HERE)' in the first part of this body text with your new topic name. Then replace this second part of the body text with the comment to appear under this new topic.">New Topic</A>

### (b) New Comment - hyperlink hl68

### General

<A HREF="mailto:a@a.com?subject=command&body=command">hyperlink picture or text</A>

### Graphics button

<A HREF="mailto:obvmail@lemoncatering.com?subject=write file:
readBody&body='write file: k:\Obvious Mail\ absoluteDir writetext comment.cmt' Replace this second part of the body text with your new comment for this page. Your new comment can include HTML formatting."><IMG BORDER=0
SRC="http://lemoncatering.com/obviousmail/images/newcomment.gif">< /A>

### Text link

<A HREF="mailto:obvmail@lemoncatering.com?subject=write file:
readBody&body='write file: k:\Obvious Mail\ absoluteDir writetext comment.cmt' Replace this second part of the body text with your new comment for this page. Your new comment can include HTML formatting.">New Comment</A>

### (c) New Comment - hyperlink hl69

### General

<A HREF="mailto:a@a.com?subject=command&body=command">hyperlink picture or text</A>

### Graphics button

<A HREF="mailto:obvmail@lemoncatering.com?subject=write file:
readBody&body='write file: k:\Obvious Mail\ absoluteDir commentDocument' Attach your file to the end of this e-mail message (or the beginning if you are using Microsoft Outlook). Then replace this second part of the body text with the comment to appear with this new document."><IMG BORDER=0
SRC="http://lemoncatering.com/obviousmail/images/additem.gif"></A>

### Text link

<A HREF="mailto:obvmail@lemoncatering.com?subject=write file:
readBody&body='write file: k:\Obvious Mail\ absoluteDir commentDocument' Attach your file to the end of this e-mail message (or the beginning if you are using Microsoft Outlook). Then replace this second part of the body text with the comment to appear with this new document."><IMG BORDER=0
SRC="http://lemoncatering.com/obviousmail/images/additem.gif"></A>

Once the appropriate mail message has been created, it is mailed to the mail address 76 so as to be directed to computer PC1a in this example. The mailing is illustrated schematically at step S6 in Figure 16. The sending of the e-mail is carried out by a conventional process which will not be described further herein.

Then, at step S7 in Figure 16, the e-mail is received and processed so that the web page data from the e-mail message is included into the hierarchical file structure associated with the website. It will be understood that the message data need not necessarily be itself hypermedia i.e. it is not necessary for the mail message to be encoded in HTML but can comprise conventional MS Word™ documents, text and other data.

Then at step S2a, the previously described conversion program module is run in order to produce hypermedia corresponding to the hierarchical file structure. Since the file structure contains the modifications produced at step S7, the resulting hypermedia produced at step S2a incorporates the changes produced by the data included in the mail message. The conversion program module operates as previously described with reference to step S2 shown in Figure 4. Thereafter, the hypermedia is uploaded to the server 3, at step S3a, which corresponds to step S3 previously described with reference to Figure 4.

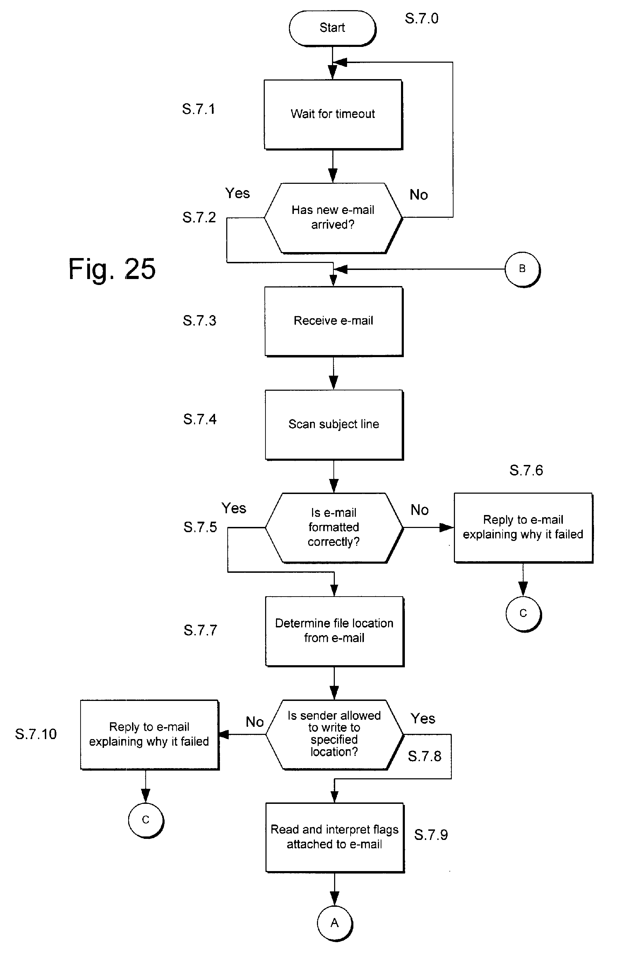

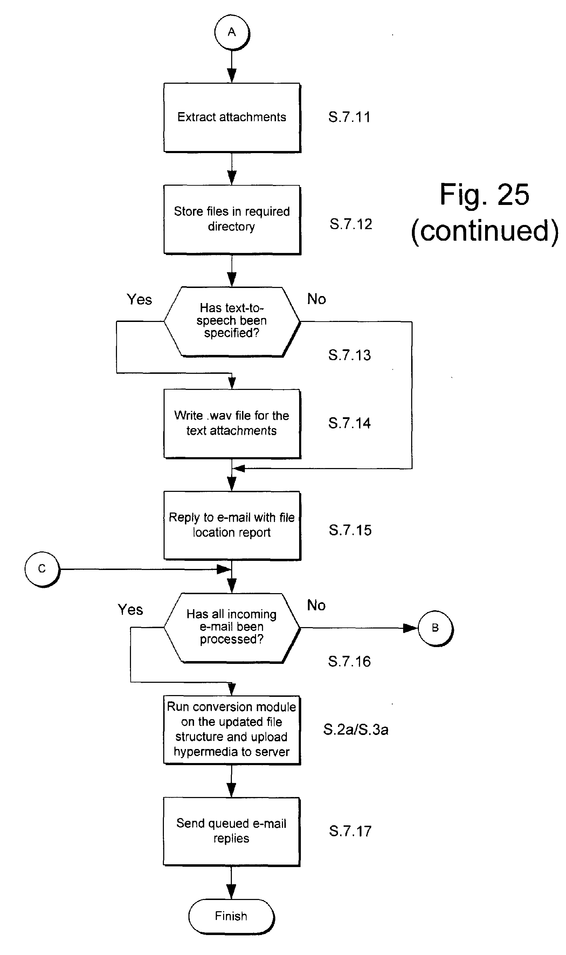

The processes carried out at step S7 will now be described in more detail with reference to Figure 25.

The process shown in Figure 25 is configured to handle e-mails with web page updates received from different users. It will be understood that the website can be accessed by different users in different locations and they may independently send web page updates by e-mail. The process of Figure 25 is arranged to wait for a timeout of a timer, at step S7.1 in order to allow a batch of in-coming e-mails to build up. At the end of the time period, a check is made at step S7.2 to see whether any new e-mails have arrived. If not, the timer process is repeated, but otherwise, the first of the received e-mails is reviewed at step S7.3 and its subject line 79 is scanned at step S7.4.

If the subject line of the e-mail is correctly formatted i.e. corresponds to a predetermined format, the e-mail is accepted for further processing but otherwise, the mail system is triggered at step S7.6 to send an e-mail back to the sender with a message indicating that the incoming e-mail has failed to meet the necessary criteria and that no further processing is to be carried out for the e-mail and the process moves to step S7.16.

At step S7.7, the file location and instruction data 77 in the e-mail is analysed. Then, at step S7.8, if the sender is permitted to write an e-mail to the particular file location, the process moves to step S7.9, but otherwise, an e-mail is sent at step S7.10 back to the sender to explain that the incoming e-mail does not meet the required criteria. No further processing is carried out for the e-mail and the process moves forward to step S7.16. Thus, access to the file structure of the web site can be restricted to particular users, to avoid hacking.

As well known in the art, conventional e-mail systems allow flags 80 (Fig. 19) to be attached to messages to signify their importance. A flag attached to the particular e-mail under consideration is analysed at step S7.9. Flags may be used to signify messages of different importance which should be processed differently.

Then, at step S7.11, if the e-mail includes an attachment, it is separated from the message body and then, at step S7.12, the attachment is stored at the appropriate location in the file structure (Figure 5), the location being determined by the file location data 77 included in the e-mail.

As known in the art, proprietary text-to-speech conversion programs are available to convert text into speech. Typically the output files from this process are written in a format with the conventional file suffix **.wav**. It may be desirable to have such **.wav** files included in the web site. If this is specified in the e-mail, it is detected at step S7.13 and a corresponding **.wav** file is prepared at step S7.14. If no such conversion has been specified, the step S7.14 is skipped. Other audio file formats can be used.

Then, at step S7.15, a reply is mailed to the sender of the e-mail to confirm that the files have been written into the file structure, and confirming their file location.

As previously mentioned, the received e-mails are processed in a batch and, at step S7.16, the process reverts back to step S7.3 if further e-mails remain in the batch to be processed. The routine repeats itself until all of the e-mails of the batch have been processed.

Then at step S2a, the conversion program module is run, as previously described, to convert the updated file structure into corresponding hypermedia. Thereafter, the step S3a of Figure 16 is performed to upload the resulting hypermedia to the server PC3, as previously described.

At step S7.17, the various e-mails produced at step S7.6, S7.10 and S7.15, are dispatched through the network so as to complete the process.

Thus, the hierarchical file structure is modified in accordance with the web page data included in the incoming e-mails and thereafter, hypermedia is produced corresponding to the modified hierarchical file structure, so as to modify the web site.

Whilst in the foregoing, the e-mails have been used to insert web page data into the file structure, it is also possible to delete data from the structure by means of the invention and to modify the file structure itself.

Many modifications and variations will be evident to those skilled in the art. For example, although the described example of the invention makes use of the conversion program module held in the folder 29 of Figure 3, it will be understood that other hypermedia production processes could be used.

Furthermore, although the file viewer used in the described example of the invention comprises the Microsoft Windows Explorer, many different versions of file viewer could be used. For example, for earlier versions of Windows, File Manager may be used. Also, if the programs are handled in later versions of DOS, the well known DOSSHELL file viewer can be used. It will be appreciated that operating systems other than Windows have their own proprietary file viewer systems, which can be similarly used in accordance with the invention.

Also, whilst the hypermedia has been described in relation to HTML, it will be appreciated that other web markup languages can be used.

The conversion program module can be supplied to users on conventional storage media such as a floppy disc or CD ROM and also can be provided to customers as a download from a server e.g. through the Internet.

It will be appreciated that the invention is not restricted to wired network systems but can be used also with wireless, mobile networks, and run on mobile telephones and other mobile web hardware.

## Claims

1. A method of changing hypermedia in a web site that comprises hypermedia produced from data organised in a hierarchical file structure with hyperlinks therein corresponding to the hierarchy of the file structure, comprising: constructing an electronic mail message addressed to a computer configuration that supports the web site, the message including web page data corresponding to information to be included in the web site, together with predetermined file location data for placing the web page data into a predetermined position in said hierarchical file structure, electronically mailing the message to the computer configuration such that the web page data is included in said hierarchical file structure according to the file location data, and converting the web page data into hypermedia for the web site with hyperlinks corresponding to the hierarchy of the file structure.

2. A method according to claim 1 including providing instruction data in the mail message defining how it is to be treated in the web site.

3. A method according to claim 1 or 2 wherein the message is constructed by activating a hyperlink on a web page in the web site so as to open an e-mail client to create an e-mail pre-addressed to the computer configuration, with the file location data corresponding to the predetermined hierarchical position for the web page data in the file structure, included therein.

4. A method according to any preceding claim wherein the converting of the web page data into hypermedia is performed by a conversion module which converts the file contents into hypermedia with hyperlinks corresponding to the hierarchy of the file structure.

5. A method according to claim 4 wherein the module is run periodically to include web page data from a plurality of said mail messages received at different times by the computer configuration.

6. A method according to claim 4 or 5 wherein successive numbers of said mail messages are queued at the computer configuration prior to conversion into hypermedia.

7. A method according to claim 6 wherein the messages are provided with flags corresponding to their priority, and including carrying out additional processing in accordance with their flagged priority

8. A method according to claim 4, 5, 6 or 7 including uploading the hypermedia produced by running the conversion module to a server for the web site.

9. A method of mailing hypermedia to be included in a web site that comprises hypermedia produced from data organised in a hierarchical file structure with hyperlinks therein corresponding to the hierarchy of the file structure, the method comprising activating a hyperlink on a web page in the web site so as to open an e-mail client to create an e-mail pre-addressed to a computer configuration that supports the web site, the e-mail including predetermined file location data for placing the web page data into a predetermined position in said hierarchical file structure, providing web page data in the e-mail for providing hypermedia to be included in the web site at a location determined by the file location data, and mailing the e-mail for reception by the computer configuration whereby to include the web page data in said hierarchical file structure according to the file location data and to be converted into hypermedia for the web site with hyperlinks corresponding to the hierarchy of the file structure.

10. A method according to claim 9 including providing instruction data in the mail message defining how it is to be treated in the web site.

11. An e-mail produced by a method according to claim 8 or 9.

12. A signal comprising a carrier modulated by data corresponding to the e-mail as claimed in claim 8, 9 or 10.

13. A method of changing hypermedia in a web site that comprises hypermedia produced from data organised in a hierarchical file structure with hyperlinks therein corresponding to the hierarchy of the file structure, comprising: receiving an electronic mail message at a computer configuration that supports the web site, the message including web page data corresponding to information to be included in the web site, together with predetermined file location data for placing the web page data into a predetermined position in said hierarchical file structure, including the web page data in said hierarchical file structure according to the file location data, and converting the web page data into hypermedia for the web site with hyperlinks corresponding to the hierarchy of the file structure.

14. A web site that comprises hypermedia produced from data organised in a hierarchical file structure with hyperlinks therein corresponding to the hierarchy of the file structure, comprising: a hyperlink on a web page in the web site operable to open an e-mail client to create an e-mail pre-addressed to a computer configuration that supports the web site, the e-mail including the file location data corresponding to the predetermined hierarchical position for the web page data in the file structure, whereby web page data corresponding to information to be included in the web site may be included by a user in the e-mail, the computer configuration being configured to receive and process the e-mail such that the web page data is included in said hierarchical file structure according to the file location data, and the web page data is converted into hypermedia for the web site with hyperlinks corresponding to the hierarchy of the file structure.

15. A web site according to claim 14 wherein its hypermedia content was initially created prior to being changed by means of the mailed web page data, by making use of a computer configuration that has an operating system wherein files are configurable in said hierarchical structure and the operating system is provided with a viewer that provides a visual display of the hierarchical structure and an indication of the file content, the viewer of the operating system being utilised to establish a hierarchical structure of files corresponding to content for the web site, and running a conversion program module to convert the file contents into hypermedia for the web site with hyperlinks therein corresponding to the file structure.

16. Software to be run on a computer configuration to provide a web site as claimed in claim 15

17. Software according to claim 16 including e-mail processing software configured to place web page data from the received e-mail into said hierarchical file structure, and a conversion program module to convert data in said hierarchical file structure into hypermedia for the web site.

18. Software according to claim 16 or 17 including code to produce said pre-addressed e-mail client with said file location information.
